# EUROPEAN PATENT SPECIFICATION

(11) **EP 2 874 483 B1**
(45) Date of publication and mention of the grant of the patent: **21.02.2018**
(21) Application number: 13819540.9
(22) Date of filing: 11.07.2013
(51) Int. Cl.: A01B 59/043

(54) **HITCH DEVICE BETWEEN AGRICULTURAL IMPLEMENT/CARRIAGE AND TRACTOR**
KUPPLUNGSVORRICHTUNG ZWISCHEN EINEM LANDWIRTSCHAFTLICHEN ARBEITSGERÄT/WAGEN UND EINEM TRAKTOR
DISPOSITIF D'ATTELAGE ENTRE UN OUTIL AGRICOLE/CHARIOT ET UN TRACTEUR

(30) Priority: 18.07.2012 DK 201270437
(43) Date of publication of application: 27.05.2015
(73) Proprietor: Siwi Maskiner ApS, 8600 Silkeborg (DK)
(72) Inventor: HELMS, Rasmus Victor Feldborg, 7361 Ejstrupholm (DK)
(74) Representative: Gregersen, Niels Henrik
(86) International application number: PCT/DK2013/050235
(87) International publication number: WO 2014/012552

(56) References cited:
- EP-A1- 1 500 321
- EP-A1- 1 500 321
- CH-A1- 701 819
- CH-A1- 701 819
- DE-U1- 9 013 888
- DE-U1- 9 013 888

## Description

### Field of the Invention

The present invention concerns a hitch device between an agricultural implement/carriage and a towing vehicle, e.g. a tractor, and of the kind indicated in the preamble of claim 1.

### Background of the Invention

Manual coupling and uncoupling between an agricultural implement/carriage and a tractor can be a relatively cumbersome and time-consuming work which even can occur several times during a work day. Therefore, it will be a very productive improvement if a hitch device can be applied that will enable the tractor driver to stay at the driver position instead of manually performing coupling and uncoupling between the implement/carriage and the tractor.

DK patent application PA 2011 00840 describes a prior art coupling device where the coupling between implement/carriage and tractor can be effected without the driver needing to leave the tractor. By this prior art hitch device the coupling operation occurs by several turns as hydraulic and electric connections are to be established at first between implement/carriage and tractor before the mechanical draw connection is established subsequently between implement/carriage and tractor.

### Object of the Invention

On this background, it is the object of the invention to indicate an improved hitch device of the latter type mentioned in the introduction by which there can be achieved an appreciable saving in time in a simple way and by simple means by coupling an agricultural implement/carriage to a towing vehicle, without the driver having to leave the driver position.

### Description of the Invention

The hitch device according to the invention is peculiar in that the first coupling part includes a projecting central journal at a lower part and laterally projecting bearing parts at either side of the former, the journal and bearing parts adapted to interact with complementarily shaped bearing parts of the second coupling part, and at an upper part including rearwardly directed guide parts that inwardly have bearings for receiving complementarily shaped bearing parts of the second coupling part, as the lower part of the first coupling part together with the complementary bearing parts of the second coupling part are adapted to constitute a mechanical draw coupling between the implement/carriage and the towing vehicle, whereas the upper part of the first coupling part together with the complementary bearing parts of the second coupling part are adapted to constitute a hydraulic and/or electric connecting coupling between the implement/carriage and the towing vehicle.

By simple measures it is hereby possible to achieve a significant saving of time by coupling an implement/carriage to a towing vehicle as the mechanical draw coupling between implement/carriage and towing vehicle can be effected simultaneously with establishing hydraulic and/or electric coupling between implement/carriage and towing vehicle. This may entail substantial savings in time, particularly in cases with many coupling and uncoupling operations a day.

By simultaneously establishing mechanical draw coupling and coupling of hydraulics and electricity, there is also achieved a considerably improved of safety which is particularly of importance when driving alternatingly in the fields and on public roads.

With the object of optimising security of the mechanical draw coupling, a hitch device according to the invention can advantageously be designed such that the first coupling part furthermore includes a pawl mechanism with a locking pawl operated by a hydraulic cylinder, and which pawl mechanism in an active locking position is adapted to prevent uncoupling between the bearing parts of the first coupling part and the complementary bearing parts of the second coupling part.

The fact that the pawl mechanism can be operated manually, or preferably automatically, in immediate connection with the act of coupling between implement/carriage and towing vehicle entails yet an advantage in time as the towing vehicle driver does not need to wait for establishment of the hydraulic and electric connections between implement/carriage.

The hitch device according to the invention is preferably designed such that the second coupling part is adapted to be connected with a drawbar eye at an outer end of a drawbar of the implement/carriage.

Alternatively, the hitch device according to the invention is designed such that the second coupling part is adapted to be connected with a ball at an outer end of a drawbar of the implement/carriage.

With the object of optimising the hitch device according to the invention, it may advantageously be designed such that the second coupling part includes a base plate disposed at a distance below the bearing parts.

With the object of facilitating and simplifying the mechanical coupling action, the hitch device according to the invention may advantageously be adapted such that the complementary bearing part of the second coupling part is constituted by a substantially vertical bearing plate with a central opening that widens downwardly and which upwardly is provided with the bearing part in the form of a semi-circular bearing part that fits with the journal of the first coupling part.

When performing the coupling, the projecting journal will automatically be guided in position by being moved from below and upwards along the inclining sides of the opening and into position in the semi-circular bearing part.

When the coupling device according to the invention at the same time is designed such that the further complementary bearing parts of the second coupling part are constituted by downwardly open hook parts adapted to interact with the laterally projecting bearing parts of the first coupling part, the downwardly open hook parts will automatically be guided on the laterally projecting bearing parts when the journal is guided into position in the semi-circular bearing part when respective coupling parts are pressed together.

The hitch device according to the invention is suitably designed such that the complementary coupling parts of the second coupling part constituting the hydraulic/electric connecting coupling between the implement/carriage and the towing vehicle are arranged at a distance above the mechanical draw coupling between two upright arms which are seated downwardly in such a way relative to the mechanical draw coupling that the arms can be pivoted rearwardly in direction against the implement/carriage, as the arms can be held in approximately vertical position by means of tension springs.

This special arrangement of hydraulic/electric connecting coupling between implement/carriage and towing vehicle is very advantageous as it is important that the hydraulic/electric connecting coupling on the second coupling part can go clear by pivoting rearwards instead of being destroyed if the coupling fails for some reason or another.

With the object of minimising the distance between implement/carriage and towing vehicle, it may be very advantageous to design the hitch device according to the invention in such a way that the first coupling part between the lower mechanical draw coupling and the upper part includes a substantially vertical connecting bar which as seen from the side has a cranked form between mutually parallel upper and lower parts such that the lower part is disposed closest to the towing vehicle, and such that the upper part can be disposed between the arms.

The hitch device according to the invention can furthermore be designed such that respective coupling parts include mutually complementing coupling parts for transmitting rotary transmission between the implement/carriage and the towing vehicle.

### Description of the Drawing

The invention is explained more closely in the following with reference to the drawing, on which:
- Fig. 1: shows a perspective view of an embodiment of a first coupling part of a hitch device according to the invention, shown mounted at the rear end of a tractor in its three-point suspension;
- Fig. 2: shows a perspective view of an embodiment of a second coupling part of a hitch device according to the invention, as seen from the front and mounted at the front end of a drawbar of implement/carriage;
- Fig. 3: shows a perspective view of the coupling part shown in Fig. 2, as seen from the back side;
- Fig. 4: shows a perspective view of an upper part of a first coupling part of a hitch device according to the invention, cf. Fig. 1;
- Fig. 5: shows a perspective view of an embodiment of an implement unit adapted to be mounted on a non-wheel supported agricultural implement, e.g. a harrow;
- Fig. 6: shows a plan view of a further embodiment of an implement unit for a hitch device according to the invention;
- Fig. 7: shows a plan side view, partly in section, of the implement unit shown in Fig. 6;
- Fig. 8: shows a perspective view of yet an embodiment of a coupled implement unit and tractor coupling part, including rotating coupling parts between interconnected power transmission shafts; and
- Fig. 9: is a perspective view showing implement unit and tractor coupling part as shown in Fig. 8 drawn slightly apart.

### Detailed Description of Embodiments of the Invention

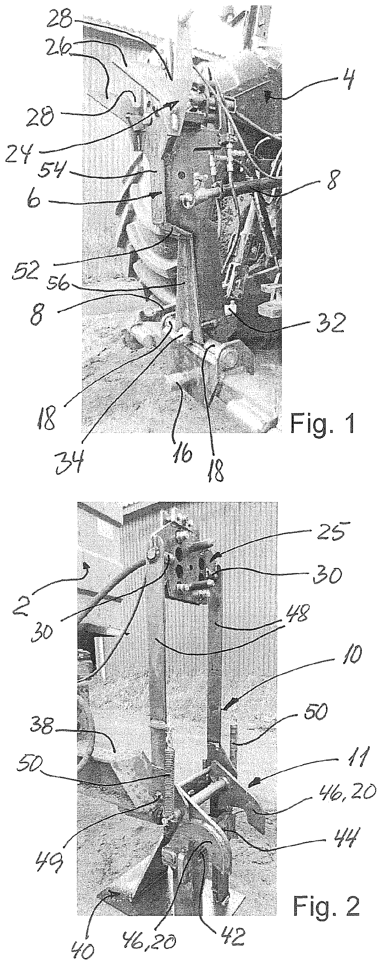

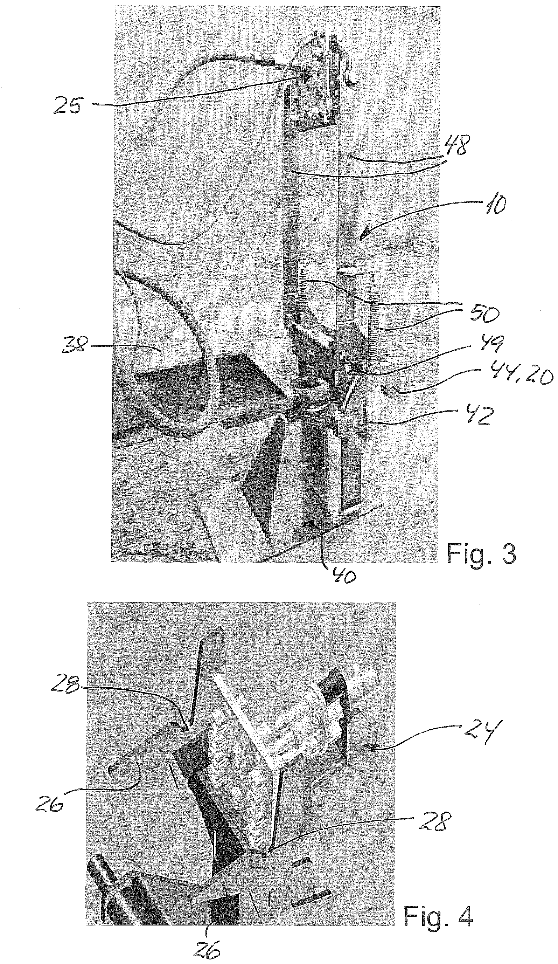

In Fig. 1 appears a rear end of a tractor 4 where a first coupling part 6 is mounted in a three-point suspension 8 of the tractor 4 with the purpose of connecting an agricultural implement/carriage 2 provided with a second coupling part 10 which is shown in Figs. 2 and 3. A lower part 14 of the first coupling part 6 is mounted between lower arms of the three-point suspension 8 whereas the upper arm of the three-point suspension is connected with an upper part 54 of a substantially vertical, cranked connecting bar 52, of which a lower part 56 is connected to the lower part 14 of the first coupling part 6 as the upper and lower parts 54 and 56 extend in parallel.

The lower part 14 of the first coupling part includes a projecting, central journal 16 and laterally projecting bearing parts 18 at either side adapted for interacting with complementary bearing parts 20, 22 in the form of a central downwardly open opening 44 that widens downwards and downwardly open hook parts 46 of the second coupling part 10. The lower part 14 of the first coupling part 6 furthermore includes a pawl mechanism 32 with a locking pawl 34 which by means of a hydraulic cylinder can be extended to an active locking position where vertical movements between respective complementary bearing parts 16, 18, 20, 22, 44, 46 of respective coupling parts 6 and 10 are prevented.

The connecting bar 52 is upwardly connected to an upper part 24 having rearwardly directed guide parts 26 with inner bearing parts 28 for receiving complementary bearing parts 30 of the second coupling part 10 which includes a lower part 11 and an upper part 25. The latter is connected to the lower part 11 by means of two upright arms 48 that are pivotably connected at 49 with the lower part 11 such that the arms 48 can be pivoted slightly backwards against the action of two tension springs 50 by which the arms 48 are biased towards vertical position.

The fact that the upper part 25 of the second coupling part 10 is mounted on the arms 48 means that the upper part 54 of the cranked connecting bar 52 in coupled condition can be disposed between the arms 48, whereby the total length of the hitch device is minimised with the object of simultaneously minimising the total length of implement/carriage 2 and tractor 4 so that the manoeuvrability is optimised at the same time.

In Fig. 3 is seen that the lower part 11 of the second coupling part 10 is connected with a drawbar eye 36 of a drawbar 38 for implement/carriage 2; instead, the connection between the lower part 11 of the second coupling part 10 and implement/carriage 2 may of course be arranged otherwise if the drawbar is provided outermost with a ball.

As shown in Figs. 2 and 3, the second coupling part 10 includes a base plate 40, but nothing will prevents use of a base plate that is mounted e.g. on the drawbar 38 or mounted at another point on the agricultural implement/ carriage 2.

The hydraulic/electric contact arrangement itself at the upper parts 24, 25 of respective coupling parts can, e.g. as shown in Fig. 4, be provided by means of common mechanical guide pins which can be stationary or be activated by means of hydraulic, pneumatic or electric displacing means.

Finally, it is to be mentioned that as indicated in claim 10 it will be within the scope of the invention if respective coupling parts 6, 10 include complementary coupling parts for transmitting rotary power transmission (PTO) between agricultural implement/carriage 2 and tractor 6.

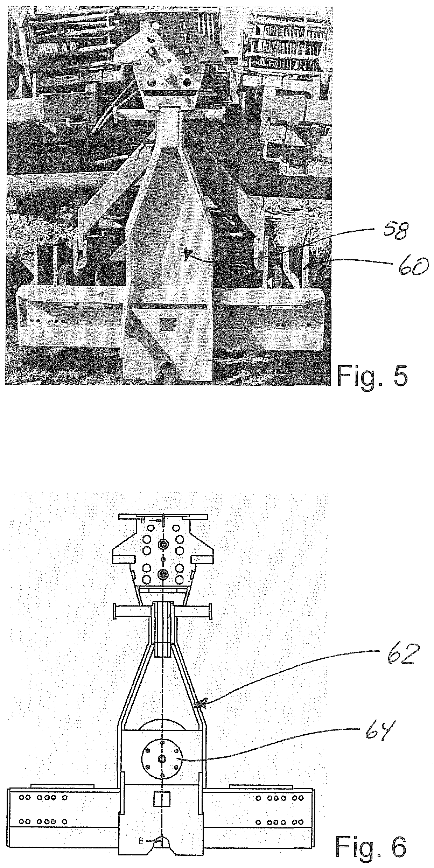

In Fig. 5 is shown an alternative implement unit 58 adapted for mounting on a non-wheel supported agricultural implement, e.g. a harrow 60, which by means of the implement unit 58 can be mounted in the usual three-point suspension 8 of the tractor in a known way.

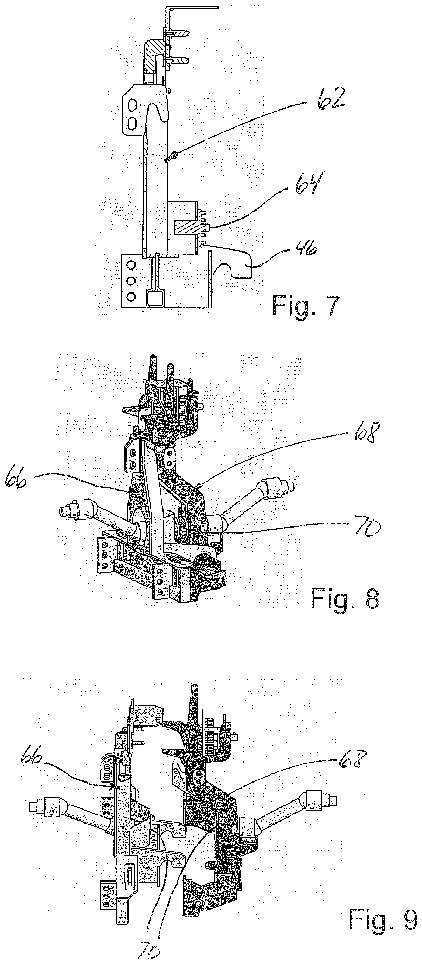

In Figs. 6 and 7 is shown a corresponding implement unit 62 which is adapted to be mounted on a non-wheel supported agricultural implement, but which also includes a coupling part 64 for coupling a rotary power transmission (PTO) which is more clearly shown in Figs. 8 and 9.

Figs. 8 and 9 show to the left an implement unit 66 with PTO and to the right a tractor unit 68 for mounting in the three-point suspension 8 of a tractor, also with PTO 70.

### Reference numbers on the drawing

- 2: agricultural implement/carriage
- 4: towing vehicle/tractor
- 6: first coupling part
- 8: three-point suspension of tractor
- 10: second coupling part
- 11: lower part of second coupling part
- 14: lower part of first coupling part
- 16: journal
- 18: laterally projecting bearing parts
- 20: complementary bearing part of second coupling part
- 22: complementary bearing part of second coupling part
- 24: upper part of first coupling part
- 25: upper part of second coupling part
- 26: rearwardly directed guide parts
- 28: bearings
- 30: complementary bearing parts of second coupling part
- 32: pawl mechanism
- 34: lock pin
- 36: drawbar eye
- 38: drawbar
- 40: base plate
- 42: vertical bearing plate
- 44: central opening
- 46: downwardly open hook parts
- 48: upright arms
- 49: lower pivot bearing for upright arms
- 50: tension springs
- 52: vertical connecting bar (cranked)
- 54: upper part of connecting bar
- 56: lower part of connecting bar
- 58: implement unit
- 60: harrow
- 62: corresponding implement unit
- 64: implement unit with PTO (rotary power transmission)
- 66: implement unit with PTO (rotary power transmission)
- 68: tractor unit with PTO (rotary power transmission)
- 70: PTO (rotary power transmission)

## Claims

1. A hitch device adapted to couple an implement/carriage (2) and a towing vehicle (4), including a first coupling part (6) adapted to be mounted in a lift system on the towing vehicle (4), and a second coupling part (10) adapted to be mounted on an implement/carriage (2), and which in addition is adapted to be connected with the first coupling part (6), **characterised in that** the first coupling part (6) includes a projecting central journal (16) at a lower part (14) and laterally projecting bearing parts (18) at either side of the former, the journal (16) and bearing parts (18) adapted to interact with complementarily shaped bearing parts (20, 22) of the second coupling part (10), and at an upper part (24) including rearwardly directed guide parts (26) that inwardly have bearings (28) for receiving complementarily shaped bearing parts (30) of the second coupling part (10), as the lower part (14) of the first coupling part (6) together with the complementary bearing parts (20, 22) of the second coupling part (10) being adapted to constitute a mechanical draw coupling between the implement/carriage (2) and the towing vehicle (4), whereas the upper part (24) of the first coupling part (6) together with the complementary bearing parts (30) of the second coupling part (10) are adapted to constitute a hydraulic and/or electric connecting coupling between the implement/carriage (2) and the towing vehicle (4).

2. Hitch device according to claim 1, **characterised in that** the first coupling part (6) furthermore includes a pawl mechanism (32) with a locking pawl (34) operated by a hydraulic cylinder, and which pawl mechanism in an active locking position is adapted to prevent uncoupling between the bearing parts (16, 18) of the first coupling part (6) and the complementary bearing parts (20, 22) of the second coupling part (10).

3. Hitch device according to claim 1, **characterised in that** the second coupling part (10) is adapted to be connected with a drawbar eye (36) at an outer end of a drawbar (38) of the implement/carriage (2).

4. Hitch device according to claim 1, **characterised in that** the second coupling part (10) is adapted to be connected with a ball at an outer end of a drawbar (38) of the implement/carriage (2).

5. Hitch device according to any preceding claim, **characterised in that** the second coupling part (10) includes a base plate (40) disposed at a distance below the bearing parts (20, 22).

6. Hitch device according to any preceding claim, **characterised in that** the bearing part (20) of the second coupling part (10) is constituted by a substantially vertical bearing plate (42) with a central opening (44) that widens downwardly and which upwardly is provided with the bearing part (20) in the form of a semi-circular bearing part fitting with the journal (16) of the first coupling part (6).

7. Hitch device according to any preceding claim, **characterised in that** the bearing parts (22) of the second coupling part (10) are constituted by downwardly open hook members (46) which are adapted to interact with the laterally projecting bearing parts (18) of the first coupling part (6).

8. Hitch device according to any preceding claim, **characterised in that** the complementary coupling parts (30) of the second coupling part (10) adapted to constitute the hydraulic and electric connecting coupling between the implement/carriage (2) and the towing vehicle (4), are arranged at a distance above the mechanical draw coupling between two upright arms (48) which are seated downwardly in such a way relative to the mechanical draw coupling that the arms (48) can be pivoted rearwardly, as the arms (48) can be held in approximately vertical position by means of tension springs (50).

9. Hitch device according to any preceding claim, **characterised in that** the first coupling part (6) between the lower mechanical draw coupling and the upper part (24) includes a substantially vertical connecting bar (52) which as seen from the side has a cranked form between mutually parallel upper (54) and lower (56) parts such that the lower part (56) is disposed closest to the towing vehicle (4), and such that the upper part (54) can be disposed between the arms (48).

10. Hitch device according to any preceding claim, **characterised in that** respective coupling parts (6, 10) include mutually complementing coupling parts for transmitting rotary transmission between the implement/carriage (2) and the towing vehicle (10).

## Patentansprüche

1. Vorrichtung zum Anschluss eines Arbeitsgeräts/eines Wagens (2) mit einem Zugfahrzeug (4) und umfassend einen ersten, für die Montage in einem Hubsystem des Zugfahrzeuges (4) vorgesehenen Kupplungsteil (6) und einen zweiten, für die Montage auf dem Arbeitsgerät/Wagen (2) vorgesehenen Kupplungsteil (10), und der ferner für den Anschluss mit dem ersten Kupplungsteil (6) eingerichtet ist, **dadurch gekennzeichnet, dass** der erste Kupplungsteil (6) einen ausragenden, mittigen Achszapfen (16) an einem unteren Teil (14) sowie seitlich ausragende Lagerteile (18) an dessen beiden Seiten aufweist, wobei der Achszapfen (16) und die Lagerteile (18) für das Zusammenwirken mit den komplementär gestalteten Lagerteilen (20, 22) des zweiten Kupplungsteils (10) eingerichtet sind und an einem Oberteil (24) nach hinten gerichtete Führungsteile (26) aufweisen, die einwärts Lager (28) zum Aufnehmen von komplementär gestalteten Lagerteilen (30) des zweiten Kupplungsteils (10) aufweisen, da der untere Teil (14) des ersten Kupplungsteils (6) zusammen mit den komplementären Lagerteilen (20, 22) des zweiten Kupplungsteils (10) für die Bildung einer mechanischen Zugkupplung zwischen dem Arbeitsgerät/Wagen (2) und dem Zugfahrzeug (4) eingerichtet ist, wobei der Oberteil (24) des ersten Kupplungsteils (6) zusammen mit den komplementären Lagerteilen (30) des zweiten Kupplungsteils (10) für die Bildung einer hydraulischen und/oder elektrischen Kupplung zum Anschluss des Arbeitsgeräts/Wagens (2) mit dem Zugfahrzeug (4) eingerichtet ist.

2. Kupplungsvorrichtung nach Anspruch 1, **dadurch gekennzeichnet, dass** der erste Kupplungsteil (6) ferner eine Sperrklinkenvorrichtung (32) mit einem von einem hydraulischen Zylinder betätigten Sperrklinken (34) aufweist, und wobei die Sperrklinkenvorrichtung in einer aktiven Sperrposition das Entkuppeln der Lagerteile (16, 18) des ersten Kupplungsteils (6) sowie der komplementären Lagerteile (20, 22) des zweiten Kupplungsteils (10) verhindert.

3. Kupplungsvorrichtung nach Anspruch 1, **dadurch gekennzeichnet, dass** der zweite Kupplungsteil (10) für den Anschluss mit einer Zugöse (36) an dem äußeren Ende der Zugstange des Arbeitsgeräts/Wagens (2) eingerichtet ist.

4. Kupplungsvorrichtung nach Anspruch 1, **dadurch gekennzeichnet, dass** der zweite Kupplungsteil (10) für den Anschluss mit einem Zugkugel an dem äußeren Ende einer Zugstange (38) des Arbeitsgeräts/Wagens (2) eingerichtet ist.

5. Kupplungsvorrichtung nach irgendeinem der vorhergehenden Ansprüche, **dadurch gekennzeichnet, dass** der zweite Kupplungsteil (10) eine Basisplatte (40) umfasst, die in einem Abstand unterhalb der Lagerteile (20, 22) angeordnet ist.

6. Kupplungsvorrichtung nach irgendeinem der vorhergehenden Ansprüche, **dadurch gekennzeichnet, dass** der Lagerteil (20) des zweiten Kupplungsteils (10) durch eine im wesentlichen senkrechte Lagerplatte (42) mit einer zentralen Öffnung (44) gebildet wird, die sich nach unten erweitert und nach oben mit dem Lagerteil (20) in der Form von einem halbkreisförmigen Lagerteil, der mit dem Achszapfen (16) des ersten Kupplungsteils (6) passt, versehen ist.

7. Kupplungsvorrichtung nach irgendeinem der vorhergehenden Ansprüche, **dadurch gekennzeichnet, dass** die Lagerteile (22) des zweiten Kupplungsteils (10) von nach unten offenen Hakenelementen (46) gebildet werden, die für das Zusammenwirken mit den seitlich ausragenden Lagerteilen (18) des ersten Kupplungsteils (6) eingerichtet sind.

8. Kupplungsvorrichtung nach irgendeinem der vorhergehenden Ansprüche, **dadurch gekennzeichnet, dass** die komplementären Kupplungssteile (30) des zweiten Kupplungsteils (10), die für die Gestaltung der hydraulischen und elektrischen Kupplung zum Anschluss des Arbeitsgeräts/Wagens (2) mit dem Zugfahrzeug (4) eingerichtet sind, in einem Abstand oberhalb der mechanischen Zugkupplung zwischen zwei aufrechten Armen (48) angeordnet sind, die relativ zu der mechanischen Zugkupplung nach unten derart angeordnet sind, dass die Arme (48) nach hinten schwenkbar sind, da die Arme (48) durch Spannfeder (50) in etwa senkrechter Position haltbar sind.

9. Kupplungsvorrichtung nach irgendeinem der vorhergehenden Ansprüche, **dadurch gekennzeichnet, dass** der erste Kupplungsteil (6) zwischen der unteren mechanischen Zugkupplung und dem Oberteil (24) eine hauptsächlich senkrechte Anschlusstraverse (52) umfasst, die seitlich gesehen eine gekröpfte Form zwischen gegenseitig parallelen oberen (54) und unteren (56) Teilen aufweist, so dass der untere Teil (56) am nächsten zum Zugfahrzeug (4) angeordnet ist, und derart, dass der obere Teil (54) zwischen den Armen (48) anbringbar ist.

10. Kupplungsvorrichtung nach irgendeinem der vorhergehenden Ansprüche, **dadurch gekennzeichnet, dass** die jeweiligen Kupplungsteile (6, 10) gegenseitig komplementäre Kupplungsteile zum Übertragen von rotierender Transmission zwischen dem Arbeitsgerät/Wagen (2) und dem Zugfahrzeug (10) umfassen.

## Revendications

1. Un dispositif d'attelage conçu pour accoupler un outil/chariot (2) et un véhicule tracteur (4), comprenant une première partie de couplage (6) conçue pour être montée dans un système de levage sur le véhicule tracteur (4), et une seconde partie de couplage (10) conçue pour être montée sur un outil/chariot (2), et qui, en outre, est conçue pour être reliée à la première partie de couplage (6), **caractérisé en ce que** la première partie de couplage (6) comprend un tourillon central (16) en saillie au niveau d'une partie inférieure (14) et des parties de support en saillie latérale (18) de chaque côté du gabarit, le tourillon (16) et les parties de support (18) conçus pour interagir avec des parties de support de forme complémentaire (20, 22) de la seconde partie de couplage (10), et au niveau d'une partie supérieure (24) comprenant des parties de guidage dirigées vers l'arrière (26) qui à l'intérieur comportent des paliers (28) pour recevoir des parties de support de forme complémentaire (30) de la seconde partie de couplage (10), comme la partie inférieure (14) de la première partie de couplage (6) conjointement avec les parties de support complémentaires (20, 22) de la seconde partie de couplage (10) étant conçue pour constituer un couplage de traction mécanique entre l'outil/le chariot (2) et le véhicule tracteur (4), tandis que la partie supérieure (24) de la première partie de couplage (6) conjointement avec les parties de support complémentaires (30) de la seconde partie de couplage (10) sont adaptées pour constituer un couplage de liaison hydraulique et/ou électrique entre l'outil/le chariot (2) et le véhicule tracteur (4).

2. Dispositif d'attelage selon la revendication 1, **caractérisé en ce que** la première partie de couplage (6) comprend en outre un mécanisme à cliquet (32) avec un cliquet de verrouillage (34) actionné par un vérin hydraulique, et lequel mécanisme à cliquet dans une position de verrouillage active est conçu pour empêcher un découplage entre les parties de support (16, 18) de la première partie de couplage (6) et les parties de support complémentaires (20, 22) de la seconde partie de couplage (10).

3. Dispositif d'attelage selon la revendication 1, **caractérisé en ce que** la deuxième partie de couplage (10) est adaptée pour être reliée à un anneau d'attelage (36) à une extrémité externe d'une barre de traction (38) de l'outil/du chariot (2).

4. Dispositif d'attelage selon la revendication 1, **caractérisé en ce que** la deuxième partie de couplage (10) est conçue pour être reliée à une balle au niveau d'une extrémité externe d'une barre de traction (38) de l'outil/du chariot (2).

5. Dispositif d'attelage selon l'une quelconque des revendications précédentes, **caractérisé en ce que** la deuxième partie de couplage (10) comprend une plaque de base (40) disposée à une distance au-dessous des parties de support (20, 22).

6. Dispositif d'attelage selon l'une quelconque des revendications précédentes, **caractérisé en ce que** la partie de support (20) de la seconde partie de couplage (10) est constituée par une plaque de support sensiblement verticale (42) ayant une ouverture centrale (44) qui s'élargit vers le bas et qui vers le haut est pourvue de la partie de support (20) sous la forme d'une pièce de support semi-circulaire s'ajustant avec le tourillon (16) de la première partie de couplage (6).

7. Dispositif d'attelage selon l'une quelconque des revendications précédentes, **caractérisé en ce que** les parties de support (22) de la deuxième partie de couplage (10) sont constitués par des éléments de crochet ouverts vers le bas (46) qui sont aptes à interagir avec les parties de support en saillie latérale (18) de la première partie de couplage (6).

8. Dispositif d'attelage selon l'une quelconque des revendications précédentes, **caractérisé en ce que** les parties de couplage complémentaire (30) de la deuxième partie de couplage (10) conçues pour constituer le couplage de liaison hydraulique et électrique entre l'outil/le chariot (2) et le véhicule tracteur (4), sont agencées à une distance au-dessus du couplage de traction mécanique entre deux bras verticaux (48) qui sont logés vers le bas de telle manière par rapport au couplage par traction mécanique que les bras (48) peuvent pivoter vers l'arrière, étant donné que les bras (48) peuvent être maintenus approximativement verticalement au moyen de ressorts de traction (50).

9. Dispositif d'attelage selon l'une quelconque des revendications précédentes, **caractérisé en ce que** la première partie de couplage (6) entre le couplage de traction mécanique inférieur et la partie supérieure (24) comprend une barre de liaison sensiblement verticale (52) qui, vu depuis le côté, a une forme coudée entre des parties supérieure (54) et inférieure (56) mutuellement parallèles de telle sorte que la partie inférieure (56) est disposée le plus près du véhicule tracteur (4), et de telle sorte que la partie supérieure (54) peut être disposée entre les bras (48).

10. Dispositif d'attelage selon l'une quelconque des revendications précédentes, **caractérisé en ce que** des parties de couplage respectives (6, 10) comprennent des parties de couplage mutuellement complémentaires pour transmettre une transmission rotative entre l'outil/le chariot (2) et le véhicule tracteur (10).
